# EUROPÄISCHE PATENTANMELDUNG

(11) **EP 2 810 548 A1**
(43) Veröffentlichungstag der Anmeldung: **10.12.2014**
(21) Anmeldenummer: 14405041.6
(22) Anmeldetag: 07.05.2014
(51) Int. Cl.: A01D 34/73

(54) **Schneidelement für eine Mähmaschine**

(30) Priorität: 08.05.2013 CH 9262013
(71) Anmelder: Schelker, Andreas, 8400 Winterthur (CH)
(72) Erfinder: SCHELKER Andreas, CH-8400 Winterthur (CH)
(74) Vertreter: Gachnang, Hans Rudolf

(57) **Zusammenfassung**

Das Schneidelement (1) umfassend einen Grundkörper gemäss Anspruch 1, der sternförmig ausgebildet ist. Dessen Schneidkanten (5) verlaufen geradlinig oder gebogen. Eine zentrale Bohrung im Masseschwerpunkt (S) des Schneidelements (1) bildet ebenfalls im Wesentlichen ein Dreieck, welches bewirkt, dass nach jedem Stillstand der Mähmaschine das Schneidelement (1) in eine andere Teilbohrung (D) gleiten kann und dadurch die drei Schneidkanten (5) gleichmässig abgenützt werden.

## Beschreibung

Gegenstand der Erfindung ist ein Schneidelement für eine Mähmaschine gemäss Oberbegriff des Patentanspruchs 1.

Seit einigen Jahren sind Mähmaschinen auf dem Markt, Mähroboter genannt, welche Rasenflächen ohne Zutun von Bedienungspersonen mähen. Diese maschinengetriebenen elektronisch gesteuerten Mähmaschinen fahren nach dem Zufallsprinzip kreuz und quer oder auf spiralförmigen Bahnen und werden nur durch entlang des Rasens verlegte Induktionsleitungen am Übertreten des Rasenrandes in ihrer Mobilität begrenzt.

Im Gegensatz zu benzinbetriebenen und von Hand gesteuerten Rasenmähern, sind die Messer nicht fest mit einem Befestigungselement, zum Beispiel mit einer rotierenden Scheibe, verbunden, sondern die meist rechteckförmigen Messer weisen eine ausserhalb ihres Schwerpunkts liegende Bohrung auf, so dass durch die Fliehkraft die Messer sich stets nach aussen ausrichten und im Falle des Auftreffens auf ein Hindernis ausweichen können. Eine solche Anordnung ist beispielsweise bekannt aus dem Husqvarna "auto mower". Derart befestigte Messer haben den Vorteil, dass sie durch Hindernisse wie Gartenplatten oder auf dem Rasen liegende Steine weniger beschädigt werden können. Durch Drehen der 200170EP- 18.09.2013

Unterseite auf die Oberseite kann eine doppelte Lebensdauer erreicht werden.
Es hat sich aber gezeigt, dass derart ausgerüstete Mähmaschinen, da sie im allgemeinen während Monaten täglich über Stunden in Betrieb sind, damit zwischen zwei Mähdurchgängen das Grass nicht allzu stark wachsen kann, in kurzen Zeitabschnitten gewartet und die Messer entweder gedreht oder ausgetauscht werden müssen. Diese Massnahme erfordert einerseits geschickte Hände des Gartenbesitzers und/oder verursacht andererseits hohe Kosten, einerseits für die Servicearbeit und andererseits für den Ankauf neuer Messer.

Eine Aufgabe der vorliegenden Erfindung besteht nun darin, ein Schneidelement zu schaffen, welches die guten Eigenschaften der bisher bekannten Messer bezüglich Kollisionsschutz und damit Beschädigung aufweisen, andererseits aber eine wesentlich längere Einsatzdauer ohne Zwischenwartung und Austausch erreichen.

Gelöst wird diese Aufgabe durch ein Schneideelement gemäss den Merkmalen des Patentanspruchs 1. Vorteilhafte Ausgestaltungen des Schneidelements sind in den abhängigen Ansprüchen umschrieben.

Durch die Anordnung der Schneidkanten auf einer sternförmigen Platte mit drei Zacken kann die Einsatzdauer 200170EP- 18.09.2013 ohne Drehen und ohne Austausch des Schneidelements verdreifacht werden. Gleichzeitig sind die Herstellkosten für das erfindungsgemässe Schneidelement mit drei Schneidkanten kaum höher als für die bisherigen Messer mit zwei parallel liegenden Schneidkanten. Die Ausbildung der im Schneidelement zentral angeordneten Bohrung, die im Wesentlichen als dreiblättriges Kleeblatt beziehungsweise drei sich schneidende Kreise ausgebildet ist, bewirkt, dass alle drei in Drehrichtung sich vorne befindlichen Schneidkanten abwechslungsweise zum Einsatz gelangen und dadurch gleichmässig abgenützt werden. Dies führt zur dreifachen Einsatzdauer des Schneidelements.

Anhand illustrierter Ausführungsbeispiele wird die Erfindung näher erläutert. Es zeigen:
- Figur 1: eine Aufsicht auf ein herkömmliches Messer mit parallel verlaufenden Schneidkanten,
- Figur 2: ein erfindungsgemässes Schneidelement in Gestalt eines gleichschenkligen Dreiecks,
- Figur 3: ein sternförmig ausgebildetes Schneidelement mit jeweils zwei geradlinig verlaufenden Schneidenabschnitten pro Schneidkante,
- Figur 4: ein sternförmiges Schneidelement mit konkav bogenförmig verlaufenden Schneidkanten und
- Figur 5: eine schematische Darstellung einer Befestigungsplatte für eine Mähmaschine mit einem aufgesetzten Schneidelement gemäss Figur 2.

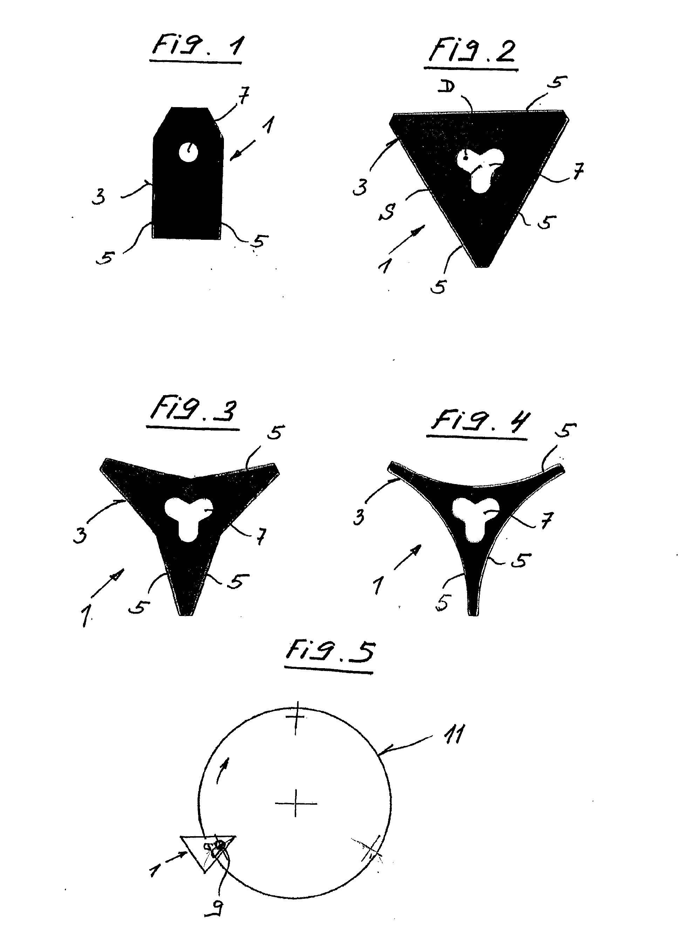

Das in Figur 1 dargestellte herkömmliche Messer 1' gemäss dem Stand der Technik umfasst einen Grundkörper 3 aus Blech mit zwei zueinander parallel verlaufenden Schneidkanten 5 und einer Bohrung 7, die sich zwischen den beiden Schneidkanten 5 befindet, jedoch nicht im Flächenschwerpunkt des Grundkörpers 3. Die Bohrung 7 dient zum Hindurchführen einer Befestigungsschraube 9, mit der das Messer 1' mit Spiel an einer Befestigungsplatte 11 schwenkbar angelenkt wird. Die Ausbildung der eine Schwenkbewegung zulassenden Befestigung zwischen dem Messer 1' und der Befestigungsplatte 11 ist aus dem Stand der Technik bekannt und wird daher nicht näher erläutert.

Das erfindungsgemässe Schneidelement 1, welches das herkömmliche Messer 1' ersetzt, umfasst dieses einen Grundkörper 3 aus Blech, der ein gleichschenkliges Dreieck bildet. Dessen Schneidkanten 5, welche durch die Kanten des Grundkörpers gebildet werden, verlaufen geradlinig. Die Ecken des Dreiecks können spitz auslaufend oder, wie in Figur 2 dargestellt, weggeschnitten oder abgerundet sein. Die zentrale Bohrung 7 ist im Wesentlichen dreieckförmig mit abgerundeten Ecken, die symmetrisch zum Masseschwerpunkt S des Grundkörpers 3 angeordnet sind. Die Bohrung 7 kann aus drei um den Masseschwerpunkt S herum angeordneten miteinander verbundenen kreisförmigen Teilbohrungen aufgebaut sein, die sich im Masseschwerpunkt S schneiden oder radial ausserhalb des Masseschwerpunkts S liegen. Alle drei Ecken der Bohrung 7 bilden jeweils einen exzentrisch liegenden Drehpunkt D, um den sich das Schneidelement 1 schwenken kann, wenn die Befestigungsplatte 11 durch den Antriebsmotor der Mähmaschine in Drehung versetzt und das Schneidelement 1 durch Zentrifugalkräfte nach aussen in eine der drei Teilbohrungen mit Drehpunkt gedrängt wird. Nach dem Zufallsprinzip wird nach einem Stillstand der Befestigungsplatte 11 das Schneidelement 1 erneut durch die Zentrifugalkraft radial nach aussen gedrängt und die Befestigungsschraube 9 beziehungsweise deren Schaft kommt in einer der drei Teilbohrungen zu liegen (vergl. Figur 5). In dieser neuen Lage ist eine der drei Schneidkanten 5 im Einsatz. Nach einem nächsten Stillstand der Mähmaschine oder bei Auftreffen einer Schneidkante 5 auf ein Hindernis, zum Beispiels einen Stein, wird das Schneidelement 1 um den Schaft der Befestigungsschraube gedreht und rastet danach wiederum durch die Zentrifugalkraft getrieben entweder in der gleichen Teilbohrung oder in einer anderen ein. Die Erfahrung hat gezeigt, dass alle drei Schneidkanten 5 einem gleichmässigen Verschleiss unterworfen werden. Dies bedeutet, dass die Einsatzdauer des Schneidelements 1 das Dreifache der Einsatzdauer des herkömmlichen Messer 1' gemäss Figur 1 beträgt. Anschliessend kann, wie beim herkömmlichen Messer 1', dieses durch Lösen der Befestigungsschraube 9 gewendet werden und es kommen die bis anhin nicht über die Peripherie der Befestigungsplatte 11 hinausragenden und in Drehrichtung der Befestigungsplatte 11 vorne liegenden Bereiche der Schneidkanten 5 zum Einsatz.

In der Ausgestaltung der Erfindung gemäss Figur 3 treten anstelle von drei geradlinig verlaufenden Schneidkanten 5 sechs solche, die sich paarweise in einem stumpfen Winkel treffen. In der zweiten Ausgestaltung der Erfindung gemäss Figur 3 ist die Masse des Schneidelements 1 kleiner und dadurch kann die schädigende Wirkung der Schläge auf die Schneidkanten 5 bei Auftreffen auf ein Hindernis verringert werden und dadurch vergrössert sich die Lebensund Einsatzdauer des Schneidelements 1.

In der dritten Ausgestaltung der Erfindung gemäss Figur 4 verlaufen die Schneidkanten konkav, wodurch eine weitere Verringerung der Masse des Schneidelements 1 erfolgt. Auch die gegenüber den beiden in den Figuren 2 und 3 gezeigten Ausführungen kleinere Masse des Schneidelements 1 in der dritten Ausführung genügt, um die einzelnen Gräser sauber zu schneiden.

### Legende der Bezugszeichen

- 1: Schneidelement
- 3: Grundkörper
- 5: Schneidkanten
- 7: Bohrung
- 9: Befestigungsschraube
- 11: Befestigungsplatte
- S: Masseschwerpunkt
- D: Teilbohrung

## Patentansprüche

1. Schneidelement für eine Mähmaschine, insbesondere einen Mähroboter für Rasenflächen, umfassend einen schwenkbar gelagerten Grundkörper (3) mit symmetrisch zum Masseschwerpunkt verlaufenden Schneidkanten (5), einer exzentrisch angeordneten Bohrung (7) als Drehlager, wenn das Schneidelement auf einer Befestigungsschraube (9) an einer Befestigungsplatte (11) an einem Antriebsmotor der Mähmaschine angeordnet ist,
**dadurch gekennzeichnet,**
- **dass** der Grundkörper (3) des Schneidelements (1) im Wesentlichen die Gestalt eines gleichschenkligen Dreiecks mit an den drei Kanten des Grundkörpers (3) ausgebildeten Schneidkanten (5) aufweist,
- **dass** die Bohrung (7) für das Drehlager im Wesentlichen dreieckförmig und mit abgerundeten Ecken, die symmetrisch zum Masseschwerpunkt (S) des Grundkörpers (3) liegen, ausgebildet ist und
- **dass** die drei abgerundeten Ecken der Bohrung (7) je ein Drehlager bilden.

2. Schneidelement nach Anspruch 1, **dadurch gekennzeichnet, dass** die Bohrung (7) aus drei kreisförmigen Teilbohrungen (D) besteht, die einander im Masseschwerpunkt S schneiden und dass die jeweiligen Teilbohrungen (D) nach dem Zufallsprinzip das exzentrisch zum Masseschwerpunkt (S) des Grundkörpers (3) liegende Drehlager bilden.

3. Schneidelement nach Anspruch 2, **dadurch gekennzeichnet**, das jede der drei Schneidkanten (5) geradlinig, konkav gebogen oder V-förmig verlaufend ausgebildet ist.
